# EUROPEAN PATENT APPLICATION

(11) **EP 3 266 847 A1**
(43) Date of publication of application: **10.01.2018**
(21) Application number: 16188447.3
(22) Date of filing: 13.09.2016
(51) Int. Cl.: C09K 3/18, C23F 11/16

(54) **INHIBITOR COMPOSITIONS FOR LIQUID DEICERS**

(30) Priority: 05.07.2016 LT 2016510
(71) Applicant: UAB "ESSPO", 29147 Anyksciai (LT)
(72) Inventor: PETRONIS, Virginijus, Anyksciai (LT); PAKELTIS, Lukas, Anyksciai (LT)
(74) Representative: Zaboliene, Reda

(57) **Abstract**

Corrosion composition in accordance with this invention comprises a series of carboxylic acids with addition of sodium metasilicate and thiocarbamide. Corrosion inhibitor composition comprises 0.1-100g of carboxylic acids, 0.1-20g of thiocarbamide and 0.01-30 g of sodium metasilicate based on 1 kg of deicer. Corrosion inhibitor composition included in liquid deicers is intended for protecting aircraft body metals and airport infrastructure against corrosion.

## Description

### Field of the Invention

The present invention relates to inhibitor compositions used as ingredients in compositions for melting ice and the uses of such compositions. More specifically, the present invention relates to deicing compositions that comprise a package of corrosion inhibitors, which contains a series of carboxylic acids with addition of sodium metasilicate and thiocarbamide. These compositions are intended for protecting aircraft metal alloys and airport infrastructure against corrosion.

### BACKGROUND OF INVENTION

Traffic safety on ice-covered roads is one of the greatest challenges. Admittedly, mechanical cleaning is not efficient when pavements are covered with ice, therefore use of deicing compositions that melt ice quickly and efficiently while being cheap and non-toxic remains in great demand. Whereas deicing compositions come into contact with vehicles and road infrastructure, it is very important that these compositions be anti-corrosive.

Airports are rather significant polluters of nature, which highly necessitates minimization of hazardous ingredients in deicers. These days various deicing compositions are used. Most manufacturers traditionally use deicers that contain phosphates, nitrites, nitrates, triazoles and other hazardous or carcinogenic substances. Salt-based deicing compositions such as sodium chloride, calcium chloride, magnesium chloride, or rock salt, which melt easily, are simple to transport and cheap, but do not possess good anticorrosive characteristics (particularly against steel or other metals) presently prevail.

Chlorides can be replaced with other chemical substances such as carbamide, formiate, acetate mixtures, sulphates, amides, alcohols, or amines. However, these substances cannot be widely used because of their low efficiency, high price and great toxicity.

There are quite a number of patented compositions featuring anticorrosive characteristics. The last decade saw increase in number of patents under which organic substances or water-soluble organic product manufacturing waste are added as corrosion inhibitors to snow-ice melting compositions.

Patent application CN2015190776 describes environmentally-friendly snow melting agent and the method to obtain it. The snow melting agent contains, among other ingredients, organic acid salt, carbamide, and silicate.

US7658861 patent describes deicing composition that contains deicing agent and corrosion inhibitor. The corrosion inhibitor comprises efficient quantity of polyhydroxycarboxylic acid, preferably aldaric or aldonic acid. The corrosion inhibitor can be dissolved in liquid (such as saline solution) and used as spray.

Patent US4986925 describes a process and composition for controlling ice and/or snow and characterised by anti-corrosion and involving a mixture comprising an alkali metal salt; a lignosulfonate; and a corrosion-reducing additive in the form of a salt of aluminium, antimony, cadmium, cobalt, manganese, nickel, zinc, or combinations thereof.

Patent US7655153 describes deicing composition with carboxylate and resistant to corrosion of galvanized steel. The composition also includes soluble silicate as corrosion inhibitor and a gluconate salt as a silicate stabilizer.

Patent US7314577 describes deicer compositions including corrosion inhibitors for coming into contact with galvanized metal. These compositions include an aqueous solution containing an alkali metal carboxylate salt and at least one corrosion inhibitor.

### Summary of the Invention

The present invention is aimed at providing a composition of corrosion inhibitors which features improved anticorrosive characteristics. A composition of corrosion inhibitors which is part of liquid deicers is intended for protecting aircraft body metals and airport infrastructure against corrosion. Liquid deicers intended for maintenance of airport runways must meet the established requirements and possess anticorrosive, antitoxic, and anticarcinogenic characteristics.

Corrosion composition in accordance with the present invention comprises a series of carboxylic acids with addition of sodium metasilicate and thiocarbamide. Corrosion inhibitor composition comprises 0.1-10 g of carboxylic acids, 0.1-2 g of thiocarbamide and 0.01-3 g of sodium metasilicate based on 1 kg of deicer.

### Detailed description of the invention

The present invention describes corrosion inhibitor compositions included in liquid deicers intended for protecting aircraft body metals and airport infrastructure against corrosion.

Corrosion inhibitor content in liquid deicers is normally up to 2% of the mass. Liquid deicers intended for maintenance of airport runways must meet the SAE (Society of Automotive Engineers) AMS (Aerospace Material Specifications) 1435 C requirements (airspace material specification - global standard in aviation).

Corrosion inhibitor composition is an ingredient in liquid deicers and is intended for protecting aircraft body metals and airport infrastructure against corrosion. To minimize the corrosive effects on elements in environment and activity of corrosion inhibitor the composition comprises carboxylic acids in the range of 0.1 to 10 g, thiocarbamide of 0.1 to 2 g, and sodium metasilicate of 0.01 to 3 g based on 1 kg of deicer.

Corrosion inhibitor composition comprises carboxylic acids selected from the group consisting of 2-ethylhexanoic acid, benzoic acid, sebacic acid, propionic acid, and lactic acid.

Corrosion inhibitor composition comprises 2-ethylhexanoic acid content in the range of 0.1 to 20 g, preferably 1 g; benzoic acid content in the range of 0.1 to 20 g, preferably 1 g; sebacic acid content in the range of 0.1 to 30 g, preferably 1 g; based on 1 kg of deicer.

Corrosion inhibitor composition comprises thiocarbamide content in the range of 0.1 to 20 g, preferably 0.5 g; based on 1 kg of deicer.

Corrosion inhibitor composition comprises sodium metasilicate content in the range of 0.01 to 30 g, preferably 0.4 g; based on 1 kg of deicer.

A series of tests with corrosion inhibitor composition was run resulting in determination of the optimal composition giving deicers the parameters meeting the ASM 1435C requirements.

The invention is further illustrated by the following examples.

### Examples

### Example 1

Corrosion inhibitor composition consisting of 2-ethylhexanoic acid, benzoic acid, prometrine, p-benzochinone, KOH and water was used.

Ingredients of the composition are given in Table 1. Quantities are given for 1 kg of deicer.

**Table 1**

| No. | Ingredient title | Quantity, g |
|---|---|---|
| 1. | 2-ethylhexanoic acid | 0.1 - 100 |
| 2. | Benzoic acid | 0.1 - 200 |
| 3. | Prometrine | 0.1 - 50 |
| 4. | P-benzoch inone | 0.1- 100 |
| 5. | KOH | 1.0 - 1000 |
| 6. | Water | 1.0 - 1000 |

Full-immersion tests (Table 2 and Table 3) revealed that composition presented in Table 1 gives better results compared to those of standard-formula composition made with phosphates, nitrites and benzotriazole.

Corrosion at full immersion under ASTM F483, using known compositions that contain triazoles, phosphates and nitrites.

**Table 2**

| No. | Test table | Mass change (mg/cm² in 24 hours | |
|---|---|---|---|
| | | Permissible | Result |
| 1. | AMS aluminium alloy, anodized in accordance with AMS 2470 | 0.3 | 0.06 |
| 2. | AMS 4041 aluminium alloy | 0.3 | 0.07 |
| 3. | AMS 4049 alloy | 0.3 | 0.06 |
| 4. | AMS 4376 magnesium alloy, dichromically treated | 0.2 | 0.2 |
| 5. | AMS 4911 or MAM 4911 titanium alloy | 0.1 | 0.06 |
| 6. | AMS 5045 carbon steel | 0.8 | 0.09 |

Corrosion at full immersion test under ASTM F483, using composition provided in Table 1.

**Table 3**

| No. | Test table | Mass change (mg/cm² in 24 hours | |
|---|---|---|---|
| | | Permissible | Result |
| 1. | AMS aluminium alloy, anodized in accordance with AMS 2470 | 0.3 | + 0.06 |
| 2. | AMS 4041 aluminium alloy | 0.3 | + 0.02 |
| 3. | AMS 4049 alloy | 0.3 | + 0.01 |
| 4. | AMS 4376 magnesium alloy, dichromically treated | 0.2 | + 0.01 |
| 5. | AMS 4911 or MAM 4911 titanium alloy | 0.1 | +0.01 |
| 6. | AMS 5045 carbon steel | 0.8 | +0.01 |

However, as tests continued in accordance with ASTM AMS 1435 requirements solution with corrosion inhibitor composition specified in Table 1 did not pass hydrogenation test in accordance with ASTM F 519 requirements. Cracks were noticed after 120 hours of testing. The standard requires no crack in 150 hours. For this reason it was decided to improve inhibitor formula.

Whereas prometrine and P-benzochinone are dangerous components, it was decided to replace them with the ones that are less dangerous yet capable of dealing with cadmium corrosion problem. The new composition is given in Table 4.

### Example 2

Corrosion inhibitor composition consisting of 2-ethylhexanoic acid, benzoic acid, sebacic acid, thiocarbamide, sodium metasilicate, KOH and water was used.

Ingredients of the composition are given in Table 4 along with limits of quantities of each component. Quantities are given for 1 kg of deicer.

**Table 4**

| No. | Ingredient title | Quantity, g |
|---|---|---|
| 1. | 2-ethylhexanoic acid | 0.1 - 20 |
| 2. | Benzoic acid | 0.1 - 20 |
| 3. | Sebacic acid | 0.1 - 30 |
| 4. | Thiocarbamide | 0.1 - 20 |
| 5. | Sodium metasilicate | 0.01 - 30 |
| 6. | KOH | 0.5 - 30 |
| 7. | Water | 1 - 50 |

The composition given in Table 4 efficiently inhibits corrosion within the specified quantity ranges.

Corrosion at full immersion test under ASTM F483, using composition provided in Table 4, was carried out. The test results are given in Table 5.

**Table 5**

| No. | Test table | Mass change (mg/cm² in 24 hours | |
|---|---|---|---|
| | | Permissible | Result |
| 1. | AMS aluminium alloy, anodized in accordance with AMS 2470 | 0.3 | <0.01 |
| 2. | AMS 4041 aluminium alloy | 0.3 | <0.01 |
| 3. | AMS 4049 alloy | 0.3 | <0.01 |
| 4. | AMS 4376 magnesium alloy, dichromically treated | 0.2 | 0.09 |
| 5. | AMS 4911 or MAM 4911 titanium alloy | 0.1 | <0.01 |
| 6. | AMS 5045 carbon steel | 0.8 | <0.01 |

Full immersion test yielded the best corrosion results.

### Example 3

Corrosion inhibitor composition consisting of 2-ethylhexanoic acid, benzoic acid, sebacic acid, thiocarbamide, sodium metasilicate, KOH, and water was used.

Ingredients of the composition are given in Table 6 along with selection of certain quantity of each ingredient. Quantities are given for 1 kg of deicer.

**Table 6**

| No. | Ingredient title | Quantity, g |
|---|---|---|
| 1. | 2-ethylhexanoic acid | 0.4 |
| 2. | Benzoic acid | 0.4 |
| 3. | Sebacic acid | 0.4 |
| 4. | Thiocarbamide | 0.5 |
| 5. | Sodium metasilicate | 0.16 |
| 6. | KOH | 0.7 |
| 7. | Water | 2 |

Quantities given in Table 6 did not produce sufficient protection against corrosion, particularly regarding corrosion of multilayer pavements (also known as sandwiches) and cadmium.

### Example 4

Corrosion inhibitor composition consisting of 2-ethylhexanoic acid, benzoic acid, sebacic acid, thiocarbamide, sodium metasilicate, KOH, and water was used.

Ingredients of the composition are given in Table 7 along with specification of optimal quantity of each ingredient. Quantities are given for 1 kg of deicer.

**Table 7**

| No. | Ingredient title | Quantity, g |
|---|---|---|
| 1. | 2-ethylhexanoic acid | 1 |
| 2. | Benzoic acid | 1 |
| 3. | Sebacic acid | 1 |
| 4. | Thiocarbamide | 0.5 |
| 5. | Sodium metasilicate | 0.4 |
| 6. | KOH | 1.68 |
| 7. | Water | 4.9 |

Corrosion inhibitor composition described herein has advantages over the currently available ones.

It is a corrosion inhibitor composition exhibiting good anticorrosive characteristics and containing carboxylic acids selected from the group consisting of 2-ethylhexanoic acid, benzoic acid, sebacic acid, propionic acid, and lactic acid. Dangerous components prometrine and P-benzochinone have been replaced with thiocarbamide and sodium metasilicate in the composition.

It is an efficient anticorrosive composition leading to reduced negative effect on environment. Substances used in production of the composition are non-toxic, non-explosive and relatively cheap; the production itself does not require sophisticated machinery or special conditions.

## Claims

1. Corrosion inhibitor composition used as ingredient in liquid deicers and intended for protecting aircraft body metal and airport infrastructure against corrosion, **characterised in that** to reduce corrosive effect on elements in environment and increase action of corrosion inhibitor the composition comprises carboxylic acids in the range of 0.1 to 100 g, thiocarbamide of 0.1 to 20 g, and sodium metasilicate of 0.01 to 30 g based on 1 kg of deicer.

2. Corrosion inhibitor composition according to claim 1, **characterised in that** carboxylic acids are selected from the group consisting of 1-ethylhexanoic acid, benzoic acid, sebacic acid, propionic acid, and lactic acid.

3. Corrosion inhibitor composition according to claims 1 or 2, **characterised in that** 2-ethylhexanoic acid is in the range of 0.1 to 20 g, preferably 1 g; benzoic acid of 0.1 to 20 g, preferably 1 g; and sebacic acid of 0.1 to 30 g, preferably 1 g based on 1 kg of deicer.

4. Corrosion inhibitor composition according to claim 1, **characterised in that** thiocarbamide content is in the range of 0.1 to 20 g, preferably 0.5 g based on 1 kg of deicer.

5. Corrosion inhibitor composition according to claim 1, **characterised in that** sodium metasilicate content is in the range of 0.01 to 30 g, preferably 0.4 g based on 1 kg of deicer.
